# EUROPEAN PATENT APPLICATION

(11) **EP 4 814 737 A1**
(43) Date of publication of application: **30.09.2026**
(21) Application number: 25167136.8
(22) Date of filing: 28.03.2025
(51) Int. Cl.: G06F 16/21, G06F 16/84

(54) **METHOD AND SYSTEM FOR SEMI-AUTOMATED SCHEMA MATCHING**

(71) Applicant: British Telecommunications Public Limited Company, London E1 8EE (GB)
(72) Inventor: NOPPEN, Johannes, London, E1 8EE (GB); ZIOLKOWSKI, Adam, London, E1 8EE (GB); JOHNS, Jack, London, E1 8EE (GB); CLARKE, Charlie, London, E1 8EE (GB)
(74) Representative: British Telecommunications public limited company Intellectual Property Department

(57) **Abstract**

The present invention relates to a computer-implemented method and system for semi-automated schema matching in a data processing environment. Schema data from at least one data source is received and normalised into a domain-level abstraction using a predefined transformation rule. At least one schema matching algorithm analyses syntactic and semantic similarities between schema elements to generate candidate correspondences. A confidence score is computed for each correspondence using a machine learning-based confidence model or a fuzzy Boolean-based confidence model, and a subset of correspondences are presented to a user via an interactive interface for validation. The schema matching model is iteratively updated by propagating semantic context from at least one user-confirmed mapping, refining the model to improve future schema matching predictions. Semantic context derived from user-confirmed mapping is used to identify unmapped schema elements that share a base type with confirmed elements, adjusting confidence scores for those unmapped elements. Validated schema mappings are stored in a repository for later retrieval and use. The system further supports re-evaluating schema correspondence based on updated schema structures, ensuring schema mappings remain consistent as schemas evolve.

## Description

### FIELD

The present invention relates to a method and system for semi-automated schema matching.

### BACKGROUND

The unification of data across multiple sources is a critical technological challenge due to its importance in enabling seamless data integration, improving decision-making, and ensuring interoperability across diverse systems. For example, organisations managing large data estates often require consolidated views of data that span multiple databases, APIs, and structured data sources. Such integration is necessary for efficient analytics, business intelligence, and system interoperability.

A key challenge in data unification is schema matching, which involves determining semantic and structural correspondences between schema elements from different data sources. This process can become particularly challenging when data sources use different terminologies, structures, or representations for semantically equivalent concepts. Accurate schema matching is essential in applications such as database migration, system integration, and federated data access, where mismatches can lead to data inconsistencies, query failures, and unreliable results.

Traditional schema matching techniques rely heavily on manual mapping, which is labour-intensive, error-prone, and impractical for large-scale or frequently changing datasets. In environments where data sources are regularly updated, expanded, or restructured, the need for continuous re-evaluation of schema mappings makes manual approaches unsustainable. Automated schema matching techniques exist, including statistical, linguistic, and machine learning approaches. However, these techniques often lack contextual awareness, resulting in low confidence mappings that require extensive manual review and correction.

Despite these efforts, schema matching remains a complex and error-prone task, especially in environments where data is constantly evolving. Schema evolution, where attributes are renamed, added, or restructured, requires continuous adaptation of schema mappings. Additionally, inconsistencies in naming and structure across different data sources create ambiguity, as semantically equivalent attributes may be represented with varying terminology, making it difficult for automated methods to establish accurate correspondences without human intervention. Furthermore, even when automated schema matching algorithms are employed, they often require substantial human verification, limiting the efficiency gains of automation.

A problem to be solved is therefore the development of a schema matching approach that reduces manual effort while maintaining accuracy and adaptability to evolving data landscapes. In conventional schema matching approaches, purely rule-based methods require extensive manual intervention and struggle to generalise across diverse data sources. Meanwhile, machine learning-based approaches often lack contextual awareness and perform poorly when schema structures evolve over time.

The present invention seeks to address this technical problem.

### SUMMARY

According to the present invention there is provided a method for semi-automated schema matching in a data processing system as defined in the appended independent method claim. Further preferable features of the method of the present invention are defined in the appended dependent method claims.

According to a further aspect of the present invention there is provided a system for semi-automated schema matching in a data processing environment as defined in the appended independent system claim. Further preferable features of the system of the present invention are defined in the appended dependent system claims.

The method of the present invention tends to provide a scalable and efficient schema matching method for data unification processes. By using domain-level abstraction and user-guided validation, the method reduces the reliance on manual schema mapping while maintaining accuracy. Unlike conventional rule-based approaches that require frequent manual updates or machine learning models that struggle to adapt to changing schemas, the present invention may dynamically refine schema correspondences through an iterative feedback-driven process. The system continuously updates confidence scores, incorporating both supporting and opposing evidence to refine previously unmapped attributes with greater accuracy. This technical effect directly addresses the problem of schema evolution in dynamic data environments.

The use of confidence scoring and iterative refinement ensures that schema correspondences improve over time, adapting to evolving data structures. Additionally, by integrating syntactic analysis, semantic analysis, and context-driven reasoning processes that apply domain-level abstraction and use semantic context derived from user-confirmed mapping, the system enhances automation while improving adaptability to new and changing schema structures. The method further applies a predefined fuzzy Boolean-based or machine learning based confidence model to compute a confidence score for identified correspondence, allowing for refined confidence estimations.

Fuzzy Boolean logic tends to provide a framework for representing and reasoning with uncertainty in a way that extends traditional Boolean logic. Unlike binary logic systems that assign a truth value of either 0 (false) or 1 (true), fuzzy Boolean systems enable intermediate values to express degrees of belief in a statement. This allows the schema matching process to capture varying levels of confidence in potential correspondences. Fuzzy Booleans can offer aggregation mechanisms that are consistent with classical propositional logic, enabling the system to combine multiple sources of evidence, such as syntactic similarity, semantic proximity, and contextual relationships, into a single confidence score. This flexibility tends to enable the system to perform nuanced confidence estimation and update confidence levels as new user-confirmed mappings or structural schema changes are introduced.

The method comprises using context-driven reasoning techniques to leverage semantic context derived from at least one user-confirmed mapping to identify previously unmapped schema elements that share a base type with the at least one user-confirmed mapping, and adjusting confidence scores for the one or more unmapped schema elements based on the context-driven reasoning. This iterative process tends to enhance schema alignment by progressively refining confidence scoring for unmapped elements based on validated mappings.

The method may further comprise re-evaluating schema correspondence upon receipt of updated schema structures to ensure schema mappings remain aligned as schema data evolves. This tends to enable adaptability to schema modifications while maintaining the accuracy of schema matching over multiple iterations.

The schema matching algorithm may apply one or more of:
- a string similarity algorithm for syntactic comparison, configured to use one or more character-based distance metrics to identify correspondence between schema elements based on names,
- a word embedding model for semantic similarity, configured to measure the semantic distance between concepts to detect equivalent terms, or
- a context-driven reasoning process that applies domain-level abstraction to infer correspondence by mapping schema elements onto a domain model.

This approach tends to improve accuracy while ensuring adaptability to diverse data structures. The system may refine schema matching operations over multiple iterations by incorporating validated correspondences into the confidence scoring process.

The confidence score may be computed using a weighted combination of similarity metrics and user-confirmed mappings. Similarity metrics may include syntactic comparisons (e.g., character-based distance metrics), semantic analysis (e.g., word embeddings), and domain-level abstraction techniques. The confidence scoring mechanism may capture both supporting and opposing evidence for a given correspondence, using fuzzy Boolean-based or probabilistic logic techniques to quantify the degree of certainty and uncertainty in a mapping. User-confirmed mappings may serve as ground truth, influencing future confidence evaluations by adjusting similarity scores for unmapped schema elements that share structural or semantic characteristics with confirmed mappings.

The confidence score may be iteratively updated based on user-confirmed mappings to improve subsequent schema matching. As users validate or modify schema correspondences, the system may dynamically update confidence scores by incorporating the newly confirmed or adjusted mappings into future similarity calculations. The system may adjust similarity scores for previously unmapped schema elements based on their semantic and structural relationships with validated correspondences, ensuring that confidence evaluations continuously improve over time. As the system receives additional user-validated correspondences, the adjusted confidence scores may influence subsequent schema matching operations, incrementally improving the reliability of automated schema matching over multiple iterations.

User-confirmed mappings may be stored and used as ground truth to refine subsequent schema matching operations. When a user validates a correspondence, the system may store the confirmed mapping and incorporate it into future schema matching evaluations. The system may propagate semantic context from user-confirmed mapping to previously unmapped schema elements that share a base type or structural relationship with the validated mapping, refining confidence scores for these unmapped elements. The stored correspondence may be iteratively used to improve schema matching accuracy over time.

The system for semi-automated schema matching in a data processing environment tends to enhance efficiency, accuracy, and scalability by automating correspondence identification while incorporating user validation. The system includes a data ingestion module that receives schema data from at least one data source (e.g. a structured data source), enabling seamless input from diverse databases. A schema transformation module normalises the received schema data into a domain-level abstraction using a predefined transformation rule, ensuring consistent comparison across different schema structures. The schema matching module executes at least one schema matching algorithm to identify one or more correspondences between schema elements, computes a confidence score for each identified correspondence using a predefined fuzzy-Boolean based or machine learning-based confidence model, and selects a subset of correspondences for user validation based on a predefined confidence threshold. The user validation interface presents the candidate correspondences to a user for confirmation (or rejection, or adjustment), minimising manual effort while maintaining accuracy. A schema refinement module iteratively updates the schema matching model based on at least one user-confirmed mapping, refining schema correspondence over multiple iterations. It further stores user-confirmed mapping as ground truth and incorporates them into future schema matching iterations to improve confidence scoring for previously unmapped schema elements. Using semantic context derived from validated mappings, the system identifies unmapped schema elements that share a base type with the at least one user-confirmed mapping, and adjusts confidence scores accordingly, enabling adaptive schema refinement. Finally, a data repository stores validated schema mappings for subsequent retrieval and integration into schema-based applications. This iterative process enhances schema alignment, optimises automation while maintaining adaptability to evolving data structures, and ensures progressive refinement of schema matching over multiple iterations.

### BRIEF DESCRIPTION OF THE FIGURES

Aspects of the present disclosure will now be described by way of example with reference to the accompanying figures. In the figures:
Figure 1 shows a schema matching workflow for extracting, normalising, identifying, and refining schema correspondence using domain-level abstraction and user confirmed mappings;
Figure 2 is a flowchart of a step-by-step process according to the present invention, illustrating an iterative schema refinement process incorporating user-confirmed mapping to improve confidence scoring and adjust previously unmapped schema elements;
Figure 3 is a flowchart representing a process according to the present invention, illustrating re-evaluation of schema correspondence upon receipt of updated schema structures to maintain schema alignment over multiple iterations; and
Figure 4 illustrates a system architecture for semi-automated schema matching, showing the interaction between schema ingestion, transformation, matching, confidence scoring, user validation, and iterative schema refinement to enhance schema alignment over multiple iterations.

### DETAILED DESCRIPTION

The present invention relates to a method and system for semi-automated schema matching in a data processing system, through the use of domain-level abstraction and iterative user feedback.

The invention addresses the challenge of unifying disparate data sources while reducing manual intervention and increasing accuracy.

By leveraging user-confirmed mappings the method identifies semantic correspondences between schemas, refines matching confidence over iterations, and dynamically adapts to changes in data structure. The system processes data in a way that minimises human input while ensuring schema alignment remains reliable and scalable.

The invention implements schema matching algorithms via a schema matching module, that applies syntactic, semantic, and context-driven reasoning techniques to detect correspondence between schema elements.

The schema matching process further incorporates a predefined fuzzy Boolean-based or machine learning-based confidence model to compute confidence scores for identified correspondences, improving accuracy in schema alignment.

For clarity, in the present description, a "correspondence" refers to a detected potential match between schema elements, whereas a "mapping" refers to a validated correspondence that has been confirmed through user input or automated confidence scoring. "Schema alignment" refers to the overall process of refining and integrating mappings into a consistent schema representation.

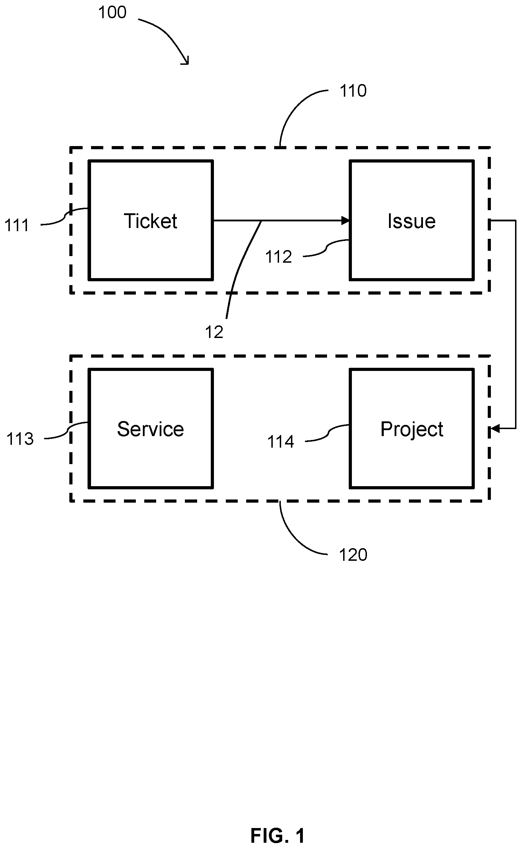

Referring to Figure 1, the schema matching process 100 involves context-driven reasoning to improve schema correspondence identification through domain-level abstraction and user-confirmed mappings 12. Figure 1 illustrates how validated user-confirmed mappings 12 are used as context to improve schema alignment across previously unmapped schema elements.

A first step 110 comprises using confirmed mapping as context, wherein the system first establishes a user-confirmed mapping 12 between two similar entities, namely a "Ticket" entity 111 and an "Issue" entity 112. These entities share attributes such as ID, title, and state, meaning they represent the same concept in different data sources. Such a confirmed relationship can act as a trusted reference for future schema matching.

The confirmed mapping 12 is used as input for a second step 120 comprising context-driven matching for unmapped attributes, wherein, using the validated Ticket 111 - Issue 112 mapping, the system searches for other unmapped attributes that have a similar base type. A "Service" entity 113 and a "Project" entity 114 are identified as containing schema attributes that correspond to the user-confirmed mapping 12. For example, the "Service" entity 113, may attribute bug fixes and change requests as both a type of "Ticket" 111. The system recognises that, since "Ticket" 111 corresponds to "Issue" 112, it is likely that these attributes should map to "Issue" 112 in another dataset. Similarly, in the "Project" entity 114, the attribute "Issue" 112 is recognised as a possible match for "Ticket" 111, further refining the schema alignment.

To give further detail, the process 100 begins with extracting and transforming input schemas into a domain-level abstraction. Schema elements from at least one structured data source are normalised against a predefined domain model to provide a consistent semantic representation across different source systems. Automatic schema matching algorithms are then executed via a schema matching module to identify candidate correspondences based on syntactic similarity, semantic similarity, and structural alignment techniques.

Once candidate correspondences are generated, confidence scores are assigned using a predefined fuzzy Boolean-based or machine learning-based confidence model. This scoring mechanism quantifies the certainty of each identified correspondence, allowing for more nuanced schema matching. A subset of high-confidence correspondences is presented for user validation, where users confirm true-positive mappings 12 through an interactive validation interface.

Upon confirmation, the system extracts relevant context from the validated correspondences. This mapping 12 includes matching entities and attributes based on naming conventions, data types, and semantic relationships. Basic string-matching techniques or embedding models may be applied to determine the semantic distance between concepts.

The extracted context is then leveraged to refine mappings for previously unmapped attributes by applying context-driven base-type matching. The system identifies unmapped attributes that share a semantically similar base type and dynamically adjusts confidence scores based on user-confirmed mappings (e.g. user-confirmed mapping 12), improving their likelihood of correct alignment. This process reduces manual effort by automatically inferring additional relationships, ensuring schema accuracy improves over time.

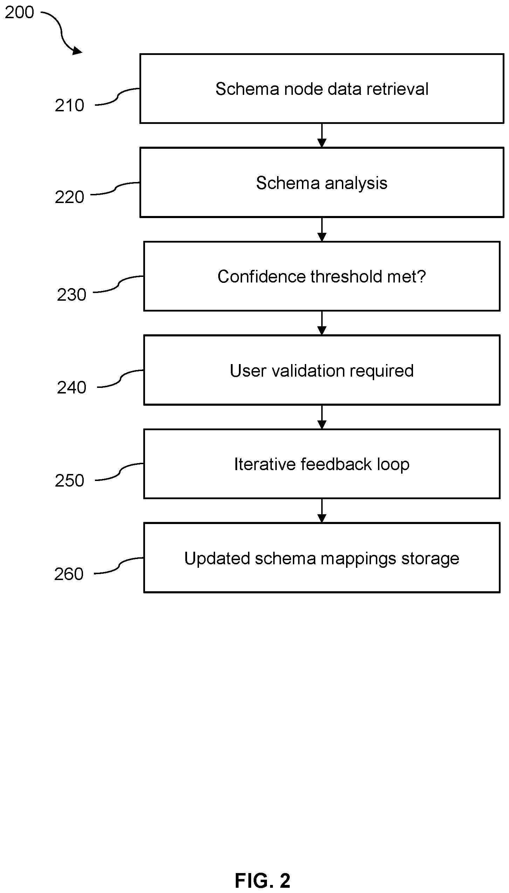

Figure 2 illustrates an embodiment of the invention in which schema relationships are iteratively refined based on evolving data structures. The iterative refinement process 200 can be described in six steps.

A first step 210 comprises schema node data retrieval. This comprises collecting historical schema data 10 from various sources.

A second step 220 comprises schema analysis. This comprises performing contextual similarity analysis to identify related attributes and entities.

A third step 230 comprises a decision point - is the confidence threshold met? If yes, then store mappings as validated schema mappings and adjust confidence scores for previously unmapped schema elements. If no, then send for user validation and refine confidence estimates based on user-confirmed mapping.

A fourth step 240 comprises a user review, confirmation and/or adjustment of suggested mappings.

A fifth step 250 comprises an iterative feedback loop, wherein schema mappings are updated based on user feedback, confidence scores are refined for previously unmapped elements using validated correspondence, and data is reprocessed.

A sixth step 260 comprises updating the schema mappings storage, wherein refined mappings for future schema alignment processes and iterative confidence refinement are stored.

This cyclical process ensures schema matching improves over time while maintaining accuracy. The iterative nature of the approach ensures that schema mappings remain accurate even as data evolves.

The system continuously refines correspondences by adjusting confidence scores for unmapped schema elements based on validated user input. Context-driven reasoning is applied to identify unmapped attributes that share a semantically similar base type, further refining schema accuracy.

The schema matching ingests schema data, applies syntactic, semantic, and contextual similarity techniques, and iteratively updates confidence scores. Unlike binary decision-based models, the confidence scoring mechanism, in some embodiments, uses fuzzy Boolean logic to quantify the strength of potential correspondence, ensuring flexibility in schema alignment.

By combining historical schema data, semantic context derived from validated mappings and base type relationships, the system iteratively enhances schema correspondence identification. As more user-confirmed mappings are introduced, the system progressively increases automation by using learned correspondences to improve subsequent schema matching predictions. This refinement process is particularly valuable for applications such as data integration, business intelligence, and regulatory compliance, where accurate schema alignment is essential.

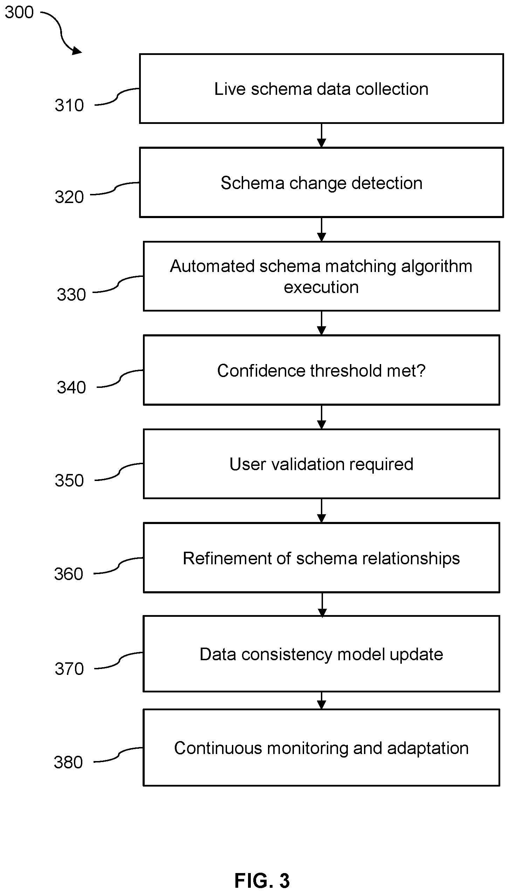

Referring now to Figure 3, this illustrates a re-evaluation process 300 regarding how the system re-evaluates schema correspondence upon receipt of updated schema structures. The system continuously processes schema updates in real-time, detecting modifications in schema structure and dynamically adjusting mappings using validated correspondences and confidence scoring. This workflow ensures that schema consistency is preserved as data evolves.

The method 300 as shown in Figure 3 begins with a first step 310 comprising live schema data collection, wherein real-time or near-real-time schema updates are introduced from data sources. This step ensures that schema correspondence remains aligned as schema changes occur.

A second step 320 comprises schema change detection, comprising identifying modifications in schema structures, new attributes, and evolving relationships. Once schema data is collected, the system re-evaluates schema correspondences to identify modifications in schema structures, newly introduced attributes, and evolving relationships between data elements. By detecting these changes during schema ingestion, the system ensures that subsequent schema matching operations are based on the most up-to-date schema information.

A third step 330 comprises automated schema matching algorithm execution, wherein at least one schema matching algorithm is applied, incorporating syntactic, semantic, and context-driven reasoning processes to infer relationships between attributes from different schemas. Upon receiving updated schema structures, the system re-evaluates schema correspondence to determine necessary modifications and ensure alignment with evolving data schemas. Confidence scores are computed using a fuzzy Boolean-based or machine learning-based model and are then adjusted for previously unmapped schema elements using validated schema mappings, progressively refining the schema alignment.

A fourth step 340 comprises a decision point where the system evaluates whether the confidence threshold has been met. If the confidence score assigned to a detected schema correspondence meets or exceeds the predefined threshold, the system automatically validates and updates the schema mappings, incorporating them into the knowledge base without requiring manual intervention. Additionally, confidence scores for previously unmapped schema elements are refined using semantic context from validated mappings. If the confidence threshold is not met, the system sends the correspondence for user-guided validation and adjusts confidence estimates accordingly.

The step of user validation 350 comprises a user review and refinement of schema correspondences, incorporating validated correspondence into confidence scoring for future schema matching. This step 350 ensures that complex or ambiguous matches are reviewed by human users, who can confirm, reject, or refine the suggested correspondences. As part of this process, confidence estimates are dynamically refined based on user feedback, improving future schema matching predictions.

Once user validation is complete, the system proceeds with the step 360, the refinement of schema relationships. This step comprises iteratively enhancing schema correspondences using historical mappings and contextual learning while adjusting confidence scores for previously unmapped elements based on validated correspondence. By using validated mappings to refine schema relationships, the system progressively incorporates newly validated schema mapping into the schema matching model, ensuring consistency and improved accuracy over time.

A further step 370 comprises a data consistency model update, wherein refined schema mappings are stored for future schema alignment processes and schema matching refinement. Following this, the step of continuous monitoring and adaptation 380 ensures schema integrity by dynamically re-evaluating schema correspondence upon receipt of updated schema structures. The system applies validated schema mapping consistently across data sources with an iterative confidence scoring mechanism progressively refines schema alignment as additional correspondences are validated.

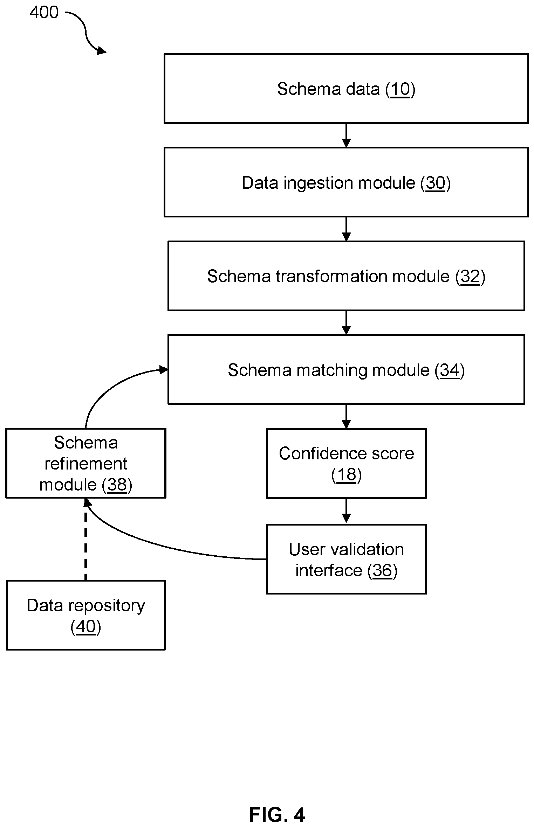

Referring now to Figure 4, the present invention further provides a system for semi-automated schema matching in a data processing environment 400, designed to improve the accuracy, efficiency, and scalability of schema integration. The system comprises several key modules that work together to extract, normalise, match, validate, and refine schema correspondences across structured data sources. These modules and the flow of data between them will now be described.

The system comprises a data ingestion module 30. The data ingestion module 30 receives schema data 10 from at least one structured data source, ensuring compatibility with various databases and formats. A schema transformation module 32 then receives the schema data 10 from the data ingestion module 30 and normalises the received schema data into a domain-level abstraction, applying predefined transformation rules to facilitate consistent representation of schema elements.

A schema matching module 34 executes at least one schema matching algorithm on the normalised schema data 10 to identify candidate correspondences between schema elements. To enhance accuracy, the module can apply one or more techniques, including a string similarity algorithm for syntactic comparison, configured to use one or more character-based distance metrics to identify correspondence between schema elements based on names, a word embedding model for semantic similarity, configured to measure the semantic distance between concepts to detect equivalent terms, and or a context-driven reasoning process that applies domain-level abstraction to infer correspondence by mapping schema elements onto a domain model.

Once correspondences are identified, the system computes a confidence score 18 for each match using a pre-defined fuzzy Boolean-based or machine learning-based confidence model. This approach quantifies the degree of certainty for each correspondence, enabling refined confidence estimations.

The confidence score 18 is then evaluated against a predefined threshold. If the confidence score 18 meets or exceeds the threshold, the system automatically validates the correspondence. If the confidence score 18 is below the threshold, the system flags the correspondence for user-validation via a user validation interface 36.

User feedback from the validation interface 36 is provided to a schema refinement module 38 which then updates a schema matching model stored in memory based on the at least one user-confirmed mapping. The refinement module 38 further uses the semantic context derived from user-confirmed mappings to identify unmapped schema elements that share a base type with the validated correspondence, adjusts the confidence scores 18 for these unmapped elements, and iteratively improves the schema matching accuracy.

The schema refinement module 38 also interacts with the data repository 40, where validated schema mappings are stored for subsequent retrieval and integration into a system requiring schema-based data access. This enables re-evaluation of schema correspondence upon receipt of updated schema, maintaining alignment as schemas evolve, and iteratively refining schema correspondence over multiple iterations.

By combining automated schema matching, user-guided validation, and iterative refinement based on validated correspondence, the system significantly reduces the manual effort required for schema integration while maintaining high accuracy and scalability across diverse data environments.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for semi-automated schema matching in a data processing system, the method comprising;
receiving, by a processor, schema data from at least one data source, the schema data comprising a plurality of schema elements;
normalising the received schema data by converting it into a domain-level abstraction using a predefined transformation rule;
executing at least one schema matching algorithm on the normalised schema data to identify one or more correspondences between schema elements, wherein the at least one schema matching algorithm analyses syntactic and semantic similarities between schema elements;
computing a confidence score for each identified correspondence using a predefined fuzzy Boolean-based or machine learning-based confidence model;
selecting, based on a predefined confidence threshold, a subset of correspondences for user validation via an interactive user interface;
receiving a user input confirming at least one correspondence from the subset as a user-confirmed mapping;
updating a schema matching model stored in memory based on the at least one user-confirmed mapping;
using context-driven reasoning techniques to leverage semantic context derived from the at least one user-confirmed mapping to identify one or more previously-unmapped schema elements that share a base type with the at least one user-confirmed mapping, and adjusting confidence scores for the one or more unmapped schema elements based on the context-driven reasoning; and
storing at least one validated schema mapping in a data repository for retrieval and integration into a schema-based application.

2. The method of claim 1, wherein the schema matching algorithm applies one or more of:
a string similarity algorithm for syntactic comparison, configured to use one or more character-based distance metrics to identify correspondence between schema elements based on names,
a word embedding model for semantic similarity, configured to measure the semantic distance between concepts to detect equivalent terms, or
a context-driven reasoning process that applies domain-level abstraction to infer correspondence by mapping schema elements onto a domain model.

3. The method of any of the preceding claims, wherein the confidence score is computed using a weighted combination of similarity metrics and user-confirmed mapping.

4. The method of any of the preceding claims, wherein the confidence score is iteratively updated based on user-confirmed mapping.

5. The method of any of the preceding claims, wherein at least one user-confirmed mapping is stored and used as ground truth to refine subsequent schema matching operations.

6. The method of any of the preceding claims, wherein the method further comprises re-evaluating schema correspondence based on receipt of updated schema structures to ensure schema mappings remain aligned as schema data evolves.

7. The method of any of the preceding claims, wherein the schema matching model uses user-confirmed mapping to refine confidence scoring for previously unmapped schema elements by incorporating semantic context derived from validated mappings.

8. A computer system comprising a processor configured for semi-automated schema matching in a data processing environment, the system comprising;
a data ingestion module configured to receive schema data from at least one data source, wherein the schema data comprises a plurality of schema elements;
a schema transformation module configured to normalise the received schema data into a domain-level abstraction using a predefined transformation rule;
a schema matching module configured to;
execute at least one schema matching algorithm on the normalised schema data to identify one or more correspondences between schema elements, wherein the at least one schema matching algorithm analyses syntactic and semantic similarities between schema elements;
compute a confidence score for each identified correspondence using a predefined fuzzy-Boolean based or machine learning-based confidence model;
select, based on a predefined confidence threshold, a subset of correspondences for user validation;
a user validation interface configured to present the subset of correspondences to a user for confirmation, and to receive a user input confirming at least one correspondence from the subset as a user-confirmed mapping;
a schema refinement module configured to update a schema matching model stored in memory based on the at least one user-confirmed mapping, and to use context-driven reasoning techniques to leverage semantic context derived from the at least one user-confirmed mapping to identify one or more previously-unmapped schema elements that share a base type with the at least one user-confirmed mapping, and to adjust confidence scores for the one or more unmapped schema elements based on the context-driven reasoning; and
a data repository configured to store at least one validated schema mapping for subsequent retrieval and integration into a schema-based application.

9. The system of claim 8, wherein the schema matching module applies one or more of:
a string similarity algorithm for syntactic comparison, configured to use one or more character-based distance metrics to identify correspondence between schema elements based on names,
a word embedding model for semantic similarity, configured to measure the semantic distance between concepts to detect equivalent terms, or
a context-driven reasoning process that uses domain-level abstraction to infer correspondences based on semantic context from user-confirmed mappings.

10. The system of any of claims 8 to 9, wherein the confidence score computation in the schema matching module uses a weighted combination of similarity metrics, previously validated mappings, and/or user-confirmed mappings.

11. The system of any of claims 8 to 10, further comprising a schema monitoring module configured to re-evaluate schema correspondence based on updated schema structures to ensure schema mappings remain accurate as schema data evolves.

12. The system of any of claims 8 to 11, wherein the schema refinement module incorporates previously validated schema mapping to refine confidence scoring for newly encountered correspondence.

13. A computer program comprising instructions which, when the program is executed by a computer, cause the computer to carry out the method of any of claims 1 to 7.

14. A computer-readable data carrier having stored thereon the computer program of claim 13.
